# EUROPÄISCHE PATENTANMELDUNG

(11) **EP 1 398 718 A1**
(43) Veröffentlichungstag der Anmeldung: **17.03.2004**
(21) Anmeldenummer: 02405793.7
(22) Anmeldetag: 12.09.2002
(51) Int. Cl.: G06F 17/60

(54) **Verfahren zur Steuerung von Verwaltungstätigkeiten auf einer Arbeitsstation durch generische Abbildung von Zuständen**

(71) Anmelder: Thought Engine, 8005 Zürich (CH)
(72) Erfinder: Bayne, John W., 8063 Zürich (CH)
(74) Vertreter: Patentanwälte Feldmann & Partner AG

(57) **Zusammenfassung**

Es wird ein Verfahren zum generischen Abbilden der Verwaltungstätigkeiten einer Firma vorgestellt. Dazu wird mindestens eine Arbeitsstation, welche mit einem Server verbunden ist benötigt. Das einzige Softwareelement, welches auf jeder lokalen Arbeitsstation vorhanden sein muss, ist ein üblicher Webbrowser. Sämtliche Datenbanken, Tabellen, Daten und Metadaten wie Hilfstabellen, Formular und andere Anweisungen, befinden sich auf einem Server oder sind auf mehreren Server verteilt. Statt Programmabläufe welche ausgeführt werden müssen, bevor die Kontrolle(Steuerung) weitergegeben werden kann, gibt es nur Daten-Zustände. Dies wird möglich, indem für jeden Benützer der Bildschirmaufbau für jede Verwaltungstätigkeit, jede Funktion und jede Bearbeitung gleich aussieht. Jede Anzeige eines Zustandes von Daten umfasst 3 nötige Wahlschalter. Es sind dies ein erster Schalter (M), ein zweiter Schalter (T) und ein aktivierbarer dritter Schalter (B). Es werden keinerlei weiteren Elemente benötigt. Bei allen diesen drei Schaltern handelt es sich um mehrfach Wählschalter.

## Beschreibung

Die Erfindung betrifft ein Verfahren zum generischen Abbilden der Verwaltungstätigkeiten und Informationsverarbeitung einer Firma auf mindestens einer Arbeitsstation mit einem Bildschirm, welche mit einem Server verbunden ist, nach dem Oberbegriff des unabhängigen Patentanspruches.

Üblicherweise werden die Tätigkeiten einer Firma in Diagramme wie Ablaufsdiagramme und Organigrammen dargestellt. Aus diesen Organigrammen und Diagrammen werden einzelne Tätigkeiten, wie Einkauf, Lagerbuchhaltung, Finanzbuchhaltung usw. als eigene Bereiche mit eigenen Softwarepaketen auf Computern durchgeführt resp. verwaltet. Die Bereiche sind untereinander nur durch bestimmte Datenschnittstellen verknüpft. Das bedeutet, dass jeder Bereich, jede Tätigkeit im Betrieb für sich selbst arbeitet und nur gewisse Daten an andere Bereiche weitergegeben oder von diesen weiterbearbeitet werden. Jedes dieser Softwarepakete besteht aus einem Programmablauf mit entsprechenden Unterprogrammen. Jede Tätigkeit, das heisst, jede Verarbeitung beginnt am Anfang des Programmlaufs. Dabei kann in verschiedene Neben- oder Unterprogramme gesprungen werden. Solche Go-To Befehle werden möglichst vermieden, indem strukturiert programmiert wird, beispielsweise nach dem Jackson-Diagram. Alle diese einzelnen Tätigkeiten einer Firma können daher in einem Jackson-Diagram dargestellt werden. Es bleiben aber trotzdem immer Programmabläufe mit Unterprogrammen, welche zu einem Zeitpunkt beginnen und zu einem anderen Zeitpunkt enden, bevor .

Dies gilt auch, wenn relationale Datenbanken benützt werden. Hier können mehrere und teilweise verschiedenartige Tabellen durch feste und defnierte Beziehungen miteinander verbunden werden. Daten und Dateninhalte können bearbeitet werden. Beispiele dafür sind im besonderen Datenbankpakete für Personal Computer. Sie laufen auf lokalen Arbeitsstationen. Die zu verarbeitenden Daten können lokal oder auch auf einem Server gespeichert sein. Die Benützung solcher Softwarepakete stellt aber immer einen Programmablauf vom Programmanfang bis zum Programmende dar. Jeder Programmablauf ist auch ein zeitlicher Ablauf. Das heisst, dass Bearbeitungen von Daten erst am Ende des Ablaufs des Programms tatsächlich fertig bearbeitet sind. Die Benützung solcher Software stellt besondere Anforderungen und birgt spezielle Gefahren in sich. Jede Softwareänderung muss an alle Arbeitsstationen verteilt und nachgeführt werden. Es stellt sich die Frage der Lizenzierung und Piraterie samt Datendiebstahl. Die Schulung des Personals ist aufwendig, da jede Tätigkeit anders aussieht und anders abläuft. Um die Konsistenz und Homogenität des Programmes sicherszustellen, wird ein höhe Aufwand benötigt.

Die Aufgabe der Erfindung besteht darin die genannten Nachteile zu vermeiden.

Diese Aufgabe wird durch die Erfindung gemäss unabhängigem Patentanspruch gelöst.

Die Erfindung wird nachstehend im Zusammenhang mit den Zeichnungen beschrieben. Es zeigen:

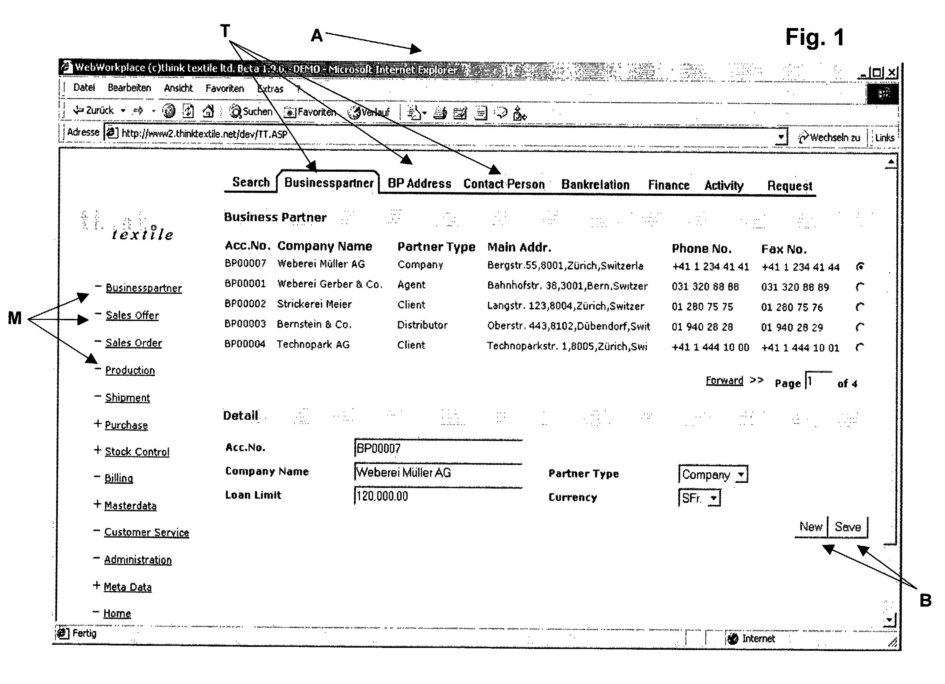

- Figur 1: einen typische Anzeige auf einer Arbeitsstation Und

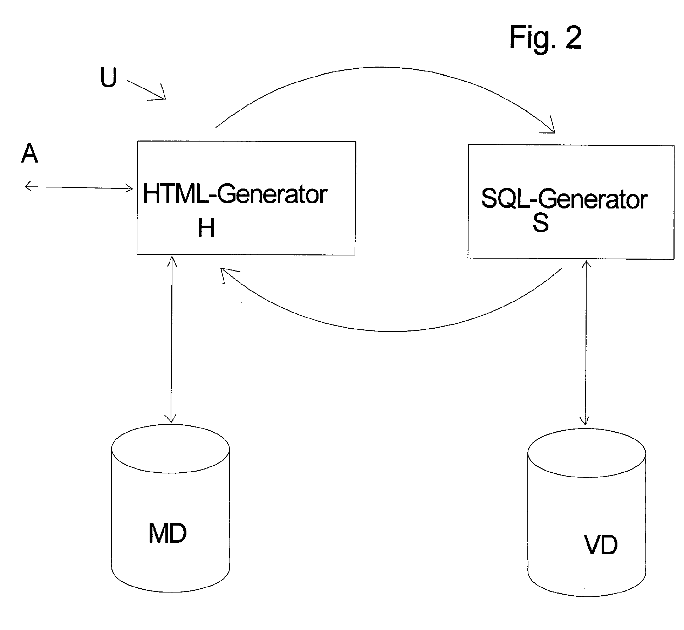

- Figur2: ein schematische Darstellung des Umformers.

Als Basisanforderung gilt, dass eine einzige, allgemein bekannte Art der Bildschirmdarstellung für die ganze Abbildung der Tätigkeiten einer Firma auf einer Arbeitsstation gilt. Es soll kein durchgehender Programmablauf von einem Anfang bis zu einem Ende mehr nötig sein. Das einzige Softwareelement, welches auf jeder lokalen Station vorhanden sein muss, ist ein üblicher Webbrowser. Sämtliche Datenbanken, Tabellen, Daten und Metadaten wie Hilfstabellen, Formulare und andere Anweisungen, befinden sich auf einem Server. Statt Programmabläufe gibt es nur Daten-Zustände. Diese Zustände werden durch einen Umformer, welcher sich auf dem Server befindet, generiert und an den Webbrowser der Arbeitsstation übergeben. Dabei wird ermöglicht, dass für jeden Benützer und für jede Verwaltungstätigkeit, jede Programmfunktion und jede Bearbeitung der Bildschirmaufbau gleich aussieht. Der Aufbau des Bildschirmes (Masken), Funktionen der einzelnen Maskenelementen sowie die Abläufe werden durch die Metadaten definiert bzw. gesteuert.

Das neue Verfahren zum generischen Abbilden der Verwaltungstätigkeiten einer Firma benötigt mindestens eine Arbeitsstation, welche mit einem Server verbunden ist. Das einzige Softwareelement, welches auf jeder lokalen Arbeitsstation vorhanden sein muss, ist ein üblicher Webbrowser. Sämtliche Datenbanken, Tabellen, Daten und Metadaten wie Hilfstabellen, Formular und andere Anweisungen, befinden sich auf einem Server oder sind auf mehreren Server verteilt. Statt Programmabläufe welche ausgeführt werden müssen, bevor die Kontrolle(Steuerung) weitergegeben werden kann, gibt es nur Daten-Zustände. Die Datenverarbeitung welche nötig ist, um einen neuen Daten-Zustand zu erreichen, wird durch Betätigung einer Steuerelemente ausgelöst und durch den SQL-Generator interpretetiert und ausgeführt. Dies wird möglich, indem für jeden Benützer der Bildschirmaufbau für jede Verwaltungstätigkeit, jede Funktion und jede Bearbeitung gleich aussieht. Jede Anzeige eines Zustandes von Daten umfasst 3 nötige Wahlschalter.

Jede Anzeige eines Zustandes von Daten umfasst drei nötige Schalter. Es sind dies ein erster Schalter M, ein zweiter Schalter T und ein aktivierbarer dritter Schalter B. Keinerlei weitere Elemente werden auf der Arbeitsstation benötigt. Bei allen handelt es sich um mehrfach Wählschalter, welche auf eine von mehreren wählbaren Positionen einstellbar sind. Die Stellungen der drei Schalter M, T, B betreiben den Umformer U auf dem Server. Der Umformer U generiert nicht nur die momentanen Zustände der Verwaltungstätigkeiten, sondern auch die abhängigen Wahlfunktionen des ersten und des zweiten Schalters M und T. Bei diesem Umformer U besteht aus einem Verbund von einem HTML-Generator H mit einem SQL-Generator S in einer Art Rückkopplungsbetrieb. Der HTML Generator H erstellt und steuert die Anzeige auf dem Webbrowser der Arbeitsstation über die Verbindung E. Sobald einer der Wahlschalter betätigt wird, übernimmt der HTML-Generator die gewählte Einstellung und alle zu diesem Zeitpunkt auf dem Bildschirm angezeigten Verwaltungsdaten. Er setzt nun den SQL-Generator in Funktion und übergibt ihm die anstehenden Verwaltungsdaten auf dem Weg a. Der SQL-Generator erzeugt jetzt die bekannten reinen SQL- Befehle und führt sie auch aus. Diese bestehen aus den Funktionen Update, Insert, Select und einigen wenigen weiteren. Die auf der Arbeitsstation angezeigten Verwaltungsdaten werden nun vom SQL-Generator dem verlangten Befehl entsprechend versorgt, gespeichert, ausgesucht, angehängt oder gelöscht. Die neu selektierten Verwaltungsdaten werden auf dem Weg b an den HTML-Generator übergeben. Dieser ist immer mit den gespeicherten Metadaten über die Leitung D in Verbindung. Er holt sich die den Wahlschalterstellungen entsprechenden Metadaten und erzeugt durch diese gesteuert die Ausgabe auf der Arbeitsstation mit den Verwaltungsdaten, die er vom SQL-Generator erhalten hat. Diese Ausgabe umfasst alle Felder, welche auf dem Webbrowser der Arbeitsstation dargestellt werden. Dies sind die Datenfelder und die Felder des ersten, zweiten und dritten Wahlschalters M, T, B. Die Ausgestaltung des Umformers mit den zwei im Rückkopplungsbetrieb arbeitenden Generatoren macht ein Definieren der Art der in Felder zu zeigenden und in Tabellen zu speichernden Daten unnötig. Die beiden Generatoren erstellen die allenfalls nötigen Datenartdefinitionen rein generisch selbst. Das bedeutet, dass man jederzeit auch neuartige Felder auf dem Bildschirm erstellen und mit Daten füllen kann, wobei der Umformer für alles weitere selbst sorgt. So ist es auch möglich, verschiedenste Sprachen für die Wahlschalter, für die Felder und für die Daten in den Feldern zu verwenden und sogar zu mischen. Der Umformer stellt die nötigen Daten, Metadaten und Datenstrukturen selbst her. Der Umformer, besteht aus einem HTML-Generator H und einem mit diesem gekoppelten SQL-Generator S wie beschrieben. Der SQL-Generator S greift auf auf Verwaltungsdaten zu, welche auf dem Server gespeichert sind, und übergibt diese selektiv an den HTML-Generator. Der HTML-Generator H selbst greift direkt auf Metadaten zu, welche ebenfalls auf dem Server gespeichert sind. Mit diesen Metadaten und den vom SQL-Generator erhaltenen Verwaltungsdaten erzeugt er die Darstellung auf dem Bildschirm der Arbeitsstation generisch.

Die Bildschirmansicht der Arbeitsstation sieht folgendermassen aus: Auf der linken Spalte auf dem Bildschirm sind als Menus die verschiedenen Verwaltungsbereiche einer Firma dargestellt und entsprechend bezeichnet. Mit dem ersten Schalter M kann auf ein gewünschtes Menu geschaltet und damit auf entsprechende Metadaten für diesen Bereich umgeschaltet werden. Auf dem Bildschirm erscheinen neue Menus, welche den Aufgaben im gewählten Verwaltungsbereich entsprechen. In den Metadaten jedes Menus sind die Bedingungen, die Tätigkeiten, die Datenzugriffe, die zugehörenden Wahlmöglichkeiten für die gleichen ersten Schalter M, zweiten Schalter T und dritten Schalter B definiert. Die Anordnung dieser drei Schalter M, T und B und die Steuerung der Darstellung von Datenfeldern auf einem Bildschirm geschieht durch bestimmte weitere Metadaten, genannt Forms F.

Der erster Schalter M stellt Auswahlmöglichkeiten für die verschiedenen eigentlichen Menus für Tätigkeiten innerhalb einer Aufgabe eines Verwaltungsbereiches dar. Diese sind in einer linken Spalte untereinander dargestellt. Jeder zweite Schalter T stellt Auswahlmöglichkeiten von Verwaltungsdaten und Metadaten, welche der Umformer für genau diese Tätigkeit benötigt, aus den Datenbanken, Tabellen und anderen Dateien zur Verfügung. Durch Betätigen des ersten Schalters M werden die Auswahl aktiviert und die dazu nötigen Daten und Metadaten auf dem Bildschirm angezeigt. Jede Auswahlmöglichkeit für den zweiten Schalter T gehört auch zu den Metadaten. Diese beinhalten grundsätzlich ihre eigene Definition und die Definition der Zugriffe auf die für die Auswahl benötigten Daten und Metadaten.

Die Anzeige der Daten und Metadaten auf dem Bildschirm erfolgt gesteuert durch die Anweisungen Forms F, welche selbst wiederum als Metadaten abgelegt sind. Sie bringen Bezeichnungen und Feldinhalte wie Verwaltungsdaten auf den Bildschirm oder auf andere Ausgabegeräte. Die Anweisung Forms F selbst müssen nicht als bekannte Formularanweisungen definiert sein. Sie können sich durch die infolge Wahl mit dem ersten Schalter M aktivierten Daten und Metadaten jedesmal selbst definieren.

Der dritte Schalter B, unten rechts auf dem Bildschirm, stellt eine Auswahl von eigentlichen Tätigkeiten zur Verfügung. Mit ihm kann ein momentaner Zustand von Feldinhalten auf dem Bildschirm eingegeben, geändert, gelöscht, gespeichert und bestätigt werden. Bei jedem durch den ersten Schalter M und den zweiten Schalter T aufgerufenen Zustand werden die gleichen Funktionen aktivierbar benötigt. Es genügen die Funktionen "Ändern", "Verlassen", "Neu" "Speichern" und "Drucken". Es werden keine weiteren Schalter für die generische Abbildung der verschiedensten Zustände der Verwaltungstätigkeiten benötigt.

Nach dem Aufstarten der Arbeitsstation erscheint ein erstes durch den Umformer, respektive durch den HTML-Generator erzeugtes Bild. Auf der linken Seite steht eine Anzahl Wahlpositionen des ersten Wahlschalters M zur Verfügung. Oben von rechts nach links steht eine Anzahl Wahlpositionen des zweiten Wahlschalters T zur Verfügung. Durch Wählen einer Position mit dem ersten Wahlschalter M wird via den HTML-Generator der SQL-Generator und von diesem wiederum der HTML-Generator in Funktion gesetzt. Es werden die zu dieser Verwaltungsfunktion nötigen Wahlpositionen des zweiten Wahlschalters T angezeigt und gleichzeitig die gewünschten Verwaltungsdaten in Feldern F. Bei Bedarf können Werte in den Feldern F direkt auf dem Bildschirm geändert werden. Anschliessend wird mit dem dritten Wahlschalter B die entsprechende SQL-Funktion bestätigt. Die Tätigkeit einer Bedienungsperson ist also auf Stellen der Wahlschalter M, T, B und allenfalls Ändern eines Feldinhaltes beschränkt. Die Tätigkeit an der Arbeitsstation beschränkt sich grundsätzlich auf Stellen von Positionen der drei Wahlschalter M, T, B. Alles andere besorgt der Umformer, indem er die nötigen und altbekannten SQL-Befehle für die Verwaltungsdaten im SQL-Generator S selbst erzeugt und mittels dem HTML-Generator und den Metadaten die nötigen Steuerungen der Arbeitsstation wieder der Arbeitsstation zur Verfügung stellt.

## Patentansprüche

1. Verfahren zum generischen Abbilden von Verwaltungsfunktionen einer Firma auf mindestens einer Arbeitsstation mit einem Bildschirm, welche mittels einer Datenleitung mit einem Server verbunden ist, wobei die Arbeitsstation durch einen Webbrowser gesteuert ist, **dadurch gekennzeichnet, dass** die an der Arbeitsstation mittels einem ersten Schalter (M) ein Menu betreffend einen Verwaltungsbereich aus einer Liste ausgewählt wird, und dass mit einem zweiten Schalter (T) eine Anzahl Beziehungen aus einer zweiten Auswahl gewählt werden, worauf Verwaltungsdaten in Feldern auf der Arbeitsstation angezeigt werden, und worauf mit einem dritten Schalter (B) Tätigkeiten in Bezug auf Firmendaten im Server aktiviert werden, indem beim Betätigen von mindestes einem der Schalter (M) und/oder (T) mittels einem auf dem Server laufenden Umformer (U), bestehend aus einem HTML-Generator (H) und einem SQL-Generator (S) ein augenblicklicher Zustand einer Verwaltungstätigkeit der Firma auf der Arbeitsstation als Ausgabegerät dargestellt wird.

2. Verfahren nach Anspruch 1, **dadurch gekennzeichnet, dass** alle Firmendaten für die generische Abbildung der Verwaltungstätigkeit auf dem Server gespeichert sind, und dass Metadaten, welche zur Steuerung der drei Schalter (M, T, B) benötigt werden, auf dem Server gespeichert sind.

3. Verfahren nach Anspruch 2, **dadurch gekennzeichnet, dass** mittels dem ersten Schalter (M) ein Tätigkeitsbereich der Firma wählbar ist.

4. Verfahren nach Anspruch 3, **dadurch gekennzeichnet, dass** mittels dem zweiten Schalter (T) augenblickliche Zustände der Firmendaten in Abhängigkeit der Stellung des ersten Schalters (M) ausgegeben werden können.

5. Verfahren nach Anspruch 2, **dadurch gekennzeichnet, dass** durch den dritten Schalter (B) Funktionen in bezug auf die Firmendaten ausgelöst werden.

6. Vorrichtung zur Ausführung des Verfahrens nach Anspruch 1, wobei ein Server, auf welchem Firmendaten gespeichert sind, und mindestens eine Arbeitsstation mit einem Bildschirm, welche von einem Webbrowser gesteuert ist, vorhanden sind, **dadurch gekennzeichnet, dass** die Arbeitsstation einen ersten Wahlschalter (M) und einen zweiten Wahlschalter (T) und einen dritten Wahlschalter (B) aufweist, und dass auf dem Server Umformer bestehend aus einem HTML-Generator (H) und einem mit diesem gekoppelten SQL-Generator (S) vorhanden ist, wobei der SQL-Generator (S) auf Verwaltungsdaten, welche auf dem Server gespeichert sind, zugreift und diese selektiv an den HTML-Generator übergibt, und dass der HTML-Generator (H) auf Metadaten, welche auf dem Server gespeichert sind, zugreift und aus diesen und den vom SQL-Generator erhaltenen Verwaltungsdaten die Darstellung auf dem Bildschirm der Arbeitsstation generisch erzeugt.

7. Vorrichtung nach Anspruch 6, **dadurch gekennzeichnet, dass** der erste Schalter (M) ein Wahlschalter ist und einen selektiven Zugriff auf Metadaten einschaltet.

8. Vorrichtung nach Anspruch 6, **dadurch gekennzeichnet, dass** der zweite Schalter (T) ein Wahlschalter ist und dessen Wahlmöglichkeiten abhängig von den, durch den ersten Schalter (M) im Zugriff stehenden, Metadaten sind.

9. Vorrichtung nach Anspruch 6, **dadurch gekennzeichnet, dass** der dritte Schalter Tätigkeiten in bezug auf die gespeicherten Firmendaten über den SQL-Generator im Server auslöst.
